# EUROPÄISCHE PATENTSCHRIFT

(11) **EP 3 242 760 B1**
(45) Veröffentlichungstag und Bekanntmachung des Hinweises auf die Patenterteilung: **20.06.2018**
(21) Anmeldenummer: 16819832.3
(22) Anmeldetag: 12.12.2016
(51) Int. Cl.: B21J 15/02, B21J 15/32, B21J 15/36, B23P 19/00, B23P 19/06

(54) **VORRICHTUNG UND VERFAHREN ZUM SETZEN EINES VERBINDUNGSELEMENTS AN EINEM WERKSTÜCK**
DEVICE AND METHOD FOR SETTING A CONNECTING ELEMENT ON A WORKPIECE
DISPOSITIF ET PROCÉDÉ POUR POSER UN ÉLÉMENT DE LIAISON SUR UNE PIÈCE

(30) Priorität: 14.12.2015 DE 102015225160; 14.03.2016 DE 102016204170
(43) Veröffentlichungstag der Anmeldung: 15.11.2017
(60) Teilanmeldung: 17186033.1
(73) Patentinhaber: Richard Bergner Verbindungstechnik GmbH & Co.KG, 91126 Schwabach (DE)
(72) Erfinder: SKOLAUDE, Andreas, 91126 Schwabach (DE)
(74) Vertreter: FDST Patentanwälte
(86) Internationale Anmeldenummer: PCT/EP2016/080700
(87) Internationale Veröffentlichungsnummer: WO 2017/102668

(56) Entgegenhaltungen:
- EP-A1- 3 031 548
- WO-A1-96/01161

## Beschreibung

Die Erfindung betrifft eine Vorrichtung sowie ein Verfahren zum Setzen von Verbindungselementen an einem Werkstück.

Bei den Verbindungselementen handelt es sich beispielsweise um Einpresselemente wie Einpressmuttern, Einpressbolzen, Einpressschrauben oder auch Niete, welche durch Ausüben einer vorbestimmten Einpresskraft in ein Werkstück (Bauteil), üblicherweise ein Blech, eingepresst werden. Bei den Verbindungselementen kann es sich daneben auch um sonstige Schrauben oder auch Niete oder Bolzen handeln. Die Verbindungselemente werden bei automatisierten Verfahren oder auch bei teilautomatisierten Verfahren mithilfe einer sogenannten Setzeinheit am Werkstück befestigt. Diese ist üblicherweise als eine Einpresseinheit ausgebildet, welche einen hydraulisch/pneumatisch/elektrisch verfahrbaren Stößel aufweist, welcher eine Einpresskraft in Setzrichtung auf das Verbindungselement ausübt. Aus der WO 2016/156359 A2 ist elektrischer Direktantrieb für eine Setzeinheit zu entnehmen.

Die Verbindungselemente werden üblicherweise mithilfe einer Zuführeinheit, einem Setzkopf der Setzeinheit zugeführt. Eine als Zuführblock bezeichnete Setzeinheit ist aus der WO 2016/055478 A1 zu entnehmen.

### Aus der gattungsgemäßen

WO 96/01161 A1 ist eine Vorrichtung zum Setzen von langgestreckten Befestigungselementen mit einem Schaft zu entnehmen. Um eine genaue axiale Ausrichtung bei der Bereitstellung des Befestigungselements zu gewährleisten ist ein spezieller Übergabemechanismus ausgebildet, welcher eine Aufnahme für das Befestigungselement aus einer Fangstation aufweist. Nach der Übernahme des Befestigungselements wird die Aufnahme mittels eines Schwenkarms in eine Übergabeposition vor einem Setzkopf der Setzeinheit geführt. Durch axiales Verschieben zum Setzkopf hin wird dann das Befestigungselement in den Setzkopf eingeführt.

Aus der nachveröffentlichten EP 3 031 548A1 ist eine Vorrichtung zum Aufsetzen einer Crimphülse auf einen Bolzen zu entnehmen. Die Crimphülse wird von einem Greifelement aus einem Vorratsbehälter aufgenommen, an eine Stirnseite eines Stempels verschwenkt und mit diesem gemeinsam in Richtung Bolzen verfahren.

In vielen Anwendungsbereichen kommt es dabei auf eine möglichst hohe Taktrate für die Befestigung der Verbindungselemente am Werkstück an. Dies betrifft insbesondere auch die Kraftfahrzeugindustrie.

Für das automatisierte Setzen werden dabei häufig Bearbeitungsmaschinen, insbesondere auch Industrieroboter eingesetzt, bei denen die Setzeinheit an einer frei im Raum verfahrbaren Roboterhand angeordnet ist. Insbesondere bei Kraftfahrzeugen werden die Verbindungselemente häufig an komplexen Karosseriebauteilen angeordnet, wobei die Befestigungsstellen aufgrund einer komplexen Bauteilgeometrie für die Setzeinheit teilweise schwer zugänglich sind.

Ausgehend hiervon liegt der Erfindung die Aufgabe zu Grunde, eine Vorrichtung und ein Verfahren zum Setzen von Verbindungselementen an einem Werkstück anzugeben, wobei eine kurze Taktzeit insbesondere bei Anwendungen in der Kraftfahrzeugindustrie erreicht ist.

Die Aufgabe wird erfindungsgemäß gelöst durch eine Vorrichtung mit den Merkmalen des Anspruchs 1. Bevorzugte Weiterbildungen sind in den abhängigen Ansprüchen enthalten. Die Aufgabe wird weiterhin gelöst durch ein Verfahren mit den Merkmalen des Anspruchs 15. Die im Hinblick auf die Vorrichtung angeführten Ausgestaltungen sowie Vorteile lassen sich sinngemäß auch auf das Verfahren übertragen.

Die Vorrichtung umfasst zum einen eine Setzeinheit mit einem Setzkopf, wobei zumindest der Setzkopf, vorzugsweise die gesamte Setzeinheit in einer Zustellrichtung, zum Werkzeug hin in eine Arbeitsposition verfahrbar ist. In der Arbeitsposition erfolgt das Setzen, also das Verbinden des Verbindungselements mit dem Werkstück. Hierzu wird das Verbindungselement mithilfe des Setzkopfes am Werkstück befestigt, insbesondere eingepresst. Weiterhin umfasst die Vorrichtung eine Zuführeinheit, mit deren Hilfe ein jeweiliges Verbindungselement dem Setzkopf zugeführt wird. Nach jedem Arbeitszyklus übergibt die Zuführeinheit wiederkehrend ein Verbindungselement an den Setzkopf. Ein jeweiliger Arbeitszyklus umfasst dabei die Zustellbewegung der Setzeinheit zum Werkstück, den eigentlichen Setzvorgang sowie eine Rückstellbewegung der Setzeinheit in eine Übergabeposition zur Übergabe des nächsten Verbindungselements.

Der Setzvorgang bzw. die Abfolge von mehreren Setzvorgängen / Arbeitszyklen wird dabei allgemein von einer Steuervorrichtung geeignet gesteuert.

Von besonderer Bedeutung ist nunmehr, dass die Zuführeinheit ebenfalls in Zustellrichtung, also in Richtung zum Werkstück von einer Ausgangsposition in eine Zwischenposition verfahrbar ist, wobei in der Zwischenposition eine Zuführung eines jeweiligen Verbindungselements zum Setzkopf erfolgt.

Die Zwischenposition ist dabei jeweils frei einstellbar, das heißt, es kann in verschiedenen, entweder diskreten oder auch in beliebigen Zwischenpositionen die Übergabe der Verbindungselemente erfolgen. Die Zwischenposition kann daher in Abhängigkeit der jeweiligen Anwendung frei gewählt werden.

Im Unterschied zu herkömmlichen Ausgestaltungen ist die Zuführeinheit daher nicht mehr ortsfest angeordnet, sondern ist gemeinsam mit der Setzeinheit in Richtung auf das Werkstück zu verfahrbar.

Zweckdienlicherweise sind dabei Setzkopf und Zuführeinheit unabhängig voneinander in Richtung zur Arbeitsposition verfahrbar, so dass für die Zuführeinheit eine individuelle Zwischenposition eingenommen werden kann, die unabhängig von der jeweiligen Position der Setzeinheit ist.

Durch diese Maßnahme ist eine individuelle Positionierung der Zuführeinheit in einer Zwischenposition nahe am Werkstück ermöglicht. Hierdurch wird eine erforderliche Rückstellbewegung der Setzeinheit nach der eigentlichen Setzoperation zur erforderlichen Aufnahme eines weiteren Verbindungselements reduziert. Hierdurch ergeben sich Einsparungen in Verfahrzeiten und damit insgesamt eine geringere Taktrate für einen jeweiligen Arbeitszyklus.

Bevorzugt ist dabei die Zuführeinheit linear verschieblich an einem Träger gelagert. Hierzu sind geeignete Stellmechanismen vorgesehen. Beispielsweise Hubkolben, Zahnstangen, Teleskopstangen etc.

Zweckdienlicherweise wird die Zwischenposition dabei in Abhängigkeit der Geometrie des Werkstücks eingenommen, und zwar vorzugsweise derart, dass zwischen zwei aufeinanderfolgenden Setzvorgängen ein möglichst kurzer Verfahrweg (Rückstellweg) für die Setzeinheit erforderlich ist.

Entsprechend gibt daher die Steuervorrichtung für einen jeweiligen Setzvorgang eine möglichst optimierte Zwischenposition vor, in die die Zuführeinheit verfährt.

Bei einer Veränderung der Zwischenposition zwischen zwei Setzpositionen verfährt dabei die Setzeinheit in die neue Zwischenposition, vorzugsweise während die Setzeinheit den Setzvorgang vornimmt, so dass also für den nachfolgenden Zyklus ein möglichst kurzer Verfahrweg für die Setzeinheit erreicht ist.

Je nach Bauteilgeometrie wird daher insgesamt die Setzeinheit möglichst optimiert positioniert. Es wird beispielsweise bei Abschnitten des Bauteils mit einer ebenen, gleichmäßigen Struktur, in die mehrere Verbindungselemente eingebracht werden müssen, die Setzeinheit möglichst nahe an das Werkstück herangeführt. Umgekehrt kann bei komplexen Geometrien mit nur geringem Bauraum es erforderlich sein, dass die Zuführeinheit an einer weiter zurückgezogenen Position positioniert ist.

Insgesamt ist in zweckdienlicher Ausgestaltung ein dynamisches Nachfahren der Zwischenposition bei aufeinanderfolgenden Setzvorgängen vorgesehen.

Alternativ zu einem kontinuierlichen Nachfahren zwischen zwei aufeinanderfolgenden Setzvorgängen verbleibt die Zuführeinheit über mehrere Setzvorgänge hinweg in der identischen Zwischenposition.

Die Zuführung des Verbindungselements erfolgt üblicherweise mithilfe eines Zuführstempels oder allgemein mit Hilfe eines Schiebeelements, über den /das das Verbindungselement insbesondere in einer Querrichtung senkrecht zur Zustellrichtung dem Setzkopf zugeführt wird.

Die Zuführeinheit ist weiterhin mit einer Zuführeinrichtung für die Verbindungselemente verbunden. Hierbei handelt es sich insbesondere um einen Zuführschlauch, über den die Verbindungselemente der Zuführeinheit insbesondere pneumatisch zugeführt werden. Alternativ oder ergänzend ist innerhalb der Zuführeinheit weiterhin ein Magazin oder auch eine sogenannte Staustrecke zur Bevorratung von mehreren Verbindungselementen ausgebildet. Bei einer Bevorratung mithilfe eines Magazins ist die ergänzende Anbindung über einen Zuführschlauch nicht zwingend erforderlich.

Vorzugsweise sind Setzeinheit und Zuführeinheit weiterhin an einem gemeinsamen Träger gehalten. Eine zurückgezogene, insbesondere obere Position definiert dabei die Ausgangsposition.

Bei dem Träger handelt es sich zweckdienlicherweise um einen bogenförmigen, insbesondere einen C-bogenförmigen Träger. Setzeinheit und Zuführeinheit sind dabei insbesondere an einem oberen Bogenteil befestigt, wohingegen an einem unteren Bogenteil eine Halterung für das Werkstück angeordnet ist. Der untere Bogenteil dient daher als ein Widerlager zur Aufnahme der Setzkräfte.

Gemäß einer bevorzugten Ausgestaltung, weist die Vorrichtung sowohl eine verfahrbare Setzeinheit als auch eine Matrize auf, die zumindest ein entgegen der Zustellrichtung verfahrbaren Matrizenstempel aufweist. Der Matrizenstempel ist innerhalb eines inneren Kanals eines Grundkörpers der Matrize mithilfe eines Antriebsmechanismus gesteuert verfahrbar. Der Antrieb und die Zustellbewegung der Setzeinheit und die des zweiten Antriebs sind dabei insbesondere aufeinander abgestimmt. Der Matrizenstempel dient allgemein als Wiederlager bei Setzen des Verbindungselements und/oder zur Ausbildung einer formschlüssigen Verbindung mit dem Werkstück, indem mit Hilfe des Matrizenstempels eine zumindest teilweise Umformung des Verbindungselements erfolgt.

Zweckdienlicherweise nimmt der Matrizenstempel insbesondere zwei Positionen für einen mehrstufigen Setzvorgang ein. In einer jeweiligen Position erfolgen dabei unterschiedliche Setzschritte oder Stufen des Setzvorgangs.

Zweckdienlicherweise handelt es sich dabei um einen Stanzvorgang als erster Schritt und um einen Umformvorgang als zweiten Schritt. Beim Stanzvorgang wird ein Loch in das Werkstück gestanzt, in das dann das Verbindungselement eingepresst wird. Das Lochstanzen erfolgt dabei entweder mit dem Verbindungselement selbst. Entsprechend handelt es sich bei dem Verbindungselement in zweckdienlicher Ausgestaltung um ein selbststanzendes Verbindungselement, insbesondere um eine Stanzmutter oder auch ein Stanzniet, speziell um einen Stanzhalbhohlniet. Alternativ weist die Setzeinheit einen Stanzstempel auf, mit dem das Lochstanzen erfolgt. Anschließend wird im zweiten Schritt ein Umformbereich des Verbindungselements umgeformt. Bei den beiden Positionen handelt es sich um eine rückgezogene (Stanz-) Position, die der Matrizenstempel während des Stanzvorgangs einnimmt und um eine vordere (Umform-) Position, in der der Matrizenstempel an der Umformung mitwirkt.

Der besondere Vorteil der Entkopplung dieser zwei Setzschritte ist darin zu sehen, dass bei diesen beiden Setzschritten unterschiedliche Kräfte erforderlich sind, einerseits für das Stanzen und andererseits für das Umformen. Durch die zwei Arbeitspositionen der Matrize und der Verfahrbarkeit des Matrizenstempels können diese beiden Setzschritte innerhalb eines einzelnen Setzvorgangs in geeigneter Weise durchgeführt werden. Dabei treten beim zweiten Setzschritt, dem Umformvorgang, üblicherweise höhere Kräfte auf.

Beim Umformvorgang wird ein Teil des Verbindungselements, insbesondere ein Kragens umgeformt, insbesondere radial aufgeweitet oder umgebördelt. Dieses Umformen dient zur Ausbildung einer formschlüssigen axialen Sicherung des Verbindungselements im Werkstück. Der Kragen hintergreift insbesondere eine Bauteilunterseite.

Gemäß einer ersten bevorzugten Variante des Setzvorgangs verfährt der Setzkopf gegen das Werkstück und presst das Verbindungselement zur Ausbildung der formschlüssigen Verbindung mit dem Werkstück gegen den Matrizenstempel. Die erforderliche Umformkraft wird daher durch die Zustellbewegung des Setzkopfes aufgebracht. Der Matrizenstempel ist ortsfest und dient als Gegenlager.

Vorzugsweise ist hierbei vorgesehen, dass zunächst mithilfe des Verbindungselements ein Loch in das Werkstück gestanzt wird, anschließend das Verbindungselement etwas zurückgefahren wird und dass anschließend der Matrizenstempel in seine vordere Position verfahren wird und danach der Setzkopf das Verbindungselement zur Umformung gegen den Matrizenstempel presst.

Gemäß einer zweiten alternativen Variante des Setzvorgangs verfährt zum Setzen des Verbindungselements der Setzkopf gegen das Werkstück und fügt das Verbindungselement in das Werkstück ein. Anschließend verfährt der Matrizenstempel gegen das Verbindungselement zur Umformung des Verbindungselements und zur Ausbildung der formschlüssigen Verbindung zwischen dem Verbindungselement und dem Werkstück verfährt. Bei dieser Variante wird daher die erforderliche Umformkraft durch die Zustellbewegung des Matrizenstempels aufgebracht. Der Setzkopf, insbesondere ein Stempel, mit dem das Verbindungselement gehalten ist, ist hierbei ortsfest und dient als Gegenlager.

Der Antriebsmechanismus für den Matrizenstempel ist allgemein für die Aufnahme oder Ausübung der erforderlichen Umformkraft ausgebildet. Der Antriebsmechanismus weist hierzu vorzugsweise ein mechanisches Gestänge auf, welches insbesondere einen Gelenkhebelmechnismus aufweist, speziell einen Kniehebel. Diese Ausgestaltung ist für beide zuvor genannten Varianten besonders geeignet, da über den Gelenkhebelmechanismus eine geeignete Umlenkung oder Aufnahme der Kräfte erfolgt, so dass allgemein ein Antrieb für die Stellbewegung des Matrizenstempels entlastet ist. Allgemein ist weiterhin vorgesehen, dass das Gestänge sich auch am Träger abstützt, so dass zumindest ein Teil der Kräfte in den Träger geleitet werden.

Vorzugsweise handelt es sich bei dem Gestänge um ein selbstsperrendes Gestänge. Dies hat den besonderen Vorteil, dass durch die Sperrung hohe Kräfte aufgenommen werden können. Trotz der Verstellmöglichkeit des Matrizenstempels und den hohen (Umform)Kräften kann hierdurch der für die Verstellung erforderliche Antrieb klein und kompaktbauend ausgebildet sein, da zumindest ein Großteil der ausgeübten Setzkräfte beim zweiten Setzschritt über das Gestänge in den Träger direkt eingeleitet werden und eben nicht auf den Antrieb übertragen werden.

Das Gestänge ist weiterhin über eine Betätigungsstange mit dem Antrieb verbunden, welche insbesondere seitlich zur Zustellrichtung nach hinten weggeführt ist. Dadurch ist der Antrieb beabstandet von der Matrize angeordnet. Der erforderliche Bauraum für die Vorrichtung, insbesondere für den Träger im Bereich der Matrize ist daher gering gehalten. Dies ist insbesondere bei Setzvorgängen in beengten Arbeitsumgebungen beispielsweise bei Kraftfahrzeugen, von besonderer Bedeutung.

Die Betätigungstange verläuft dabei vorzugsweise platzsparend innerhalb des Trägers, welcher insbesondere als bogenförmiger Träger ausgebildet ist. Die Matrize ist dabei an einem unteren Bogenteil angeordnet. Ergänzend ist vorzugsweise auch der Antrieb innerhalb des Trägers, beispielsweise in einer Ausnehmung oder in einem Durchbruch.

Für den zweiten Antrieb für die Verstellung des Matrizenstempels wird vorzugsweise ein elektrischer Antrieb eingesetzt. Alternativ könnten auch pneumatische oder hydraulische Antriebe eingesetzt werden. Daneben wird für den (ersten) Antrieb für die Setzeinheit vorzugsweise ebenfalls ein Elektroantrieb oder alternativ ein pneumatischer oder hydraulische Antrieb eingesetzt.

Insgesamt zeichnet sich daher die Vorrichtung durch zwei Antriebe, nämlich einen für die Setzeinheit und einen für den Matrizenstempel aus, die jeweils speziell gesteuert eine definierte Bewegung veranlassen.

Die Matrize weist allgemein einen vorzugsweise ringförmigen Grundkörper auf, innerhalb dessen der Matrizenstempel in Vertikalrichtung verfahrbar angeordnet ist. Ergänzend weist der Grundkörper in bevorzugter Weiterbildung eine insbesondere seitliche Öffnung zum Entsorgen eines Stanzbutzens auf, welcher beim Stanzschritt anfällt.

Für eine zuverlässige Entsorgung weist die Matrize weiterhin eine Klappe auf, welche zwischen einer Offenstellung und einer geschlossen Stellung verstellbar ist. In der Offenstellung ist die seitliche Öffnung geöffnet.

Vorzugsweise dient die Klappe in der geöffneten Stellung gleichzeitig nach Art einer Rampe, auf der der Stanzbutzen zur Öffnung weggebracht wird.

Die Klappe wird zweckdienlicherweise weiterhin automatisch durch eine Bewegung des Matrizenstempels, insbesondere durch den Stempel selbst betätigt. Bei der Klappe handelt es sich dabei vorzugsweise um eine Drehklappe.

Die gesamte hier beschriebene Vorrichtung ist wahlweise an einer feststehenden Bearbeitungsmaschine vorzugsweise jedoch an einem frei im Raum beweglichen Manipulator, insbesondere an einem mehrachsigen Industrieroboter befestigt. Hierzu ist insbesondere der Träger an einer Manipulatorhand (Roboterhand) befestigt, sodass die gesamte Vorrichtung quasi frei im Raum verfahrbar und an die gewünschte Bearbeitungsposition an das Werkstück verfahrbar ist, an der ein jeweiliges Verbindungselement gesetzt werden soll.

Von besonderer Bedeutung ist allgemein, dass innerhalb eines Arbeitszykluses mit der Vorrichtung sowohl ein Stanzschritt als auch der eigentliche Setzschritt erfolgt. Hierdurch ist insgesamt eine kurze Bearbeitungszeit eines Werkstücks erreicht.

Die einzelnen Aspekte der Vorrichtung werden nachfolgend zu den Figuren weiter erläutert. Die Figuren zeigen jeweils in teilweise vereinfachten Darstellungen:
- Fig. 1: eine Seitenansicht einer Vorrichtung zur Durchführung eines Setzvorgangs zum Setzen eines Verbindungselements, umfassend eine Setzeinheit sowie eine Zuführeinheit, die sich in einer Ausgangsposition befinden,
- Fig. 2: eine ausschnittsweise vergrößerte Ansicht der Vorrichtung gemäß Fig. 1, wobei sich die Setzeinheit und die Zuführeinheit sich in einer ersten Zwischenposition befinden,
- Fig. 3: eine vergrößerte ausschnittsweise Darstellung der Fig. 2, wobei ergänzend eine Übergabe eines Verbindungselements von der Zuführeinheit zu der Setzeinheit dargestellt ist,
- Fig. 4: eine ausschnittsweise vergrößerte Darstellung der Vorrichtung gemäß Fig. 1, bei der sich die Setzeinheit in einer Setzposition zur Durchführung des Setzvorgangs und die Zuführeinheit in der ersten Zwischenposition befinden,
- Fig. 5: eine ausschnittsweise vergrößerte Darstellung der Vorrichtung gemäß Fig. 1, bei der ausgehend von der Situation gemäß Fig. 4 die Zuführeinheit in eine zweite Zwischenposition verfahren ist, während sich die Setzeinheit noch in der Setzposition befindet,
- Fig. 6A: eine ausschnittsweise vergrößerte Darstellung nach Art einer Schnittdarstellung durch die Vorrichtung im Bereich einer Matrize mit einem aufliegenden, als Blech ausgebildeten Werkstück, welches von der Setzeinheit gegen die Matrize gepresst wird und mit einem verstellbaren Matrizenstempel, welcher sich in einer zurückgezogenen Position während eines Stanzvorgangs befindet,
- Fig. 6B: eine vergrößerte Darstellung der Fig. 6A im Bereich der Matrize zur Erläuterung des Abführens eines Stanzbutzens über eine seitliche Öffnung in der Matrize,
- Fig. 7A: eine Darstellung ähnlich der Fig. 6A, wobei sich nach erfolgtem Stanzvorgang der Matrizenstempel in einer vorderen Position befindet,
- Fig. 7B: eine vergrößerte Darstellung der Fig. 7A, bei der sich das Verbindungselement noch in einer Vormontageposition vor einem Umformvorgang befindet sowie
- Fig. 7C: eine vergrößerte Darstellung im Bereich der Matrize nach einem Umformvorgang, wobei ein Kragen des Verbindungselements zur formschlüssigen Verbindung mit dem Werkstück umgeformt ist.

In den Figuren sind gleich wirkende Teile mit den gleichen Bezugszeichen versehen.

Die in den Figuren dargestellte Vorrichtung 2 dient zur Durchführung eines insbesondere mehrstufigen Setzvorgangs, bei dem ein Verbindungselement 4 an einem Werkstück 6, insbesondere ein Blech, gesetzt wird. Bei dem Verbindungselement 4 handelt es sich beispielsweise um eine Einpressmutter, einen Einpressbolzen (Schraube) oder auch einen Niet. Bei dem Verbindungselement 4 handelt es sich beispielsweise um ein selbststanzendes Verbindungselement, beispielsweise eine selbststanzende Mutter oder einen selbststanzenden Niet.

Die Vorrichtung 2 weist eine Setzeinheit 8 auf, mittels der der eigentliche Setzvorgang, also das Einpressen des Verbindungselements 4, im Werkstück 6 erfolgt. Weiterhin weist die Vorrichtung 2 eine Zuführeinheit 10 auf, die zum insbesondere seitlichen Zuführen des Verbindungselements 4 zur Setzeinheit 8 ausgebildet ist. Die Setzeinheit 8 sowie die Zuführeinheit 10 sind an einem Träger 12 angeordnet. Dieser ist - wie im Ausführungsbeispiel dargestellt - vorzugsweise nach Art eines bogenförmigen, insbesondere C-bogenförmigen Trägers 12 ausgebildet. Dieser weist einen oberen Bogenteil 12A sowie einen unteren Bogenteil 12B auf.

Die Vorrichtung 2 weist weiterhin einen ersten Antrieb 14 auf, bei dem es sich insbesondere um einen elektromotorischen Antrieb handelt. Diesem ersten Antrieb 14 ist ein Stößel 16 zugeordnet, welcher insbesondere elektromotorisch in einer Zustellrichtung 18 verfahrbar ist. Am vorderen Ende des Stößels 16 ist die Setzeinheit 8 befestigt. Diese wird also mithilfe des Stößels 16 in Zustellrichtung 18 versetzt. Der erste Antrieb 14 ist dabei am Träger 12, insbesondere am vorderen Ende des oberen Bogenteils 12A fixiert.

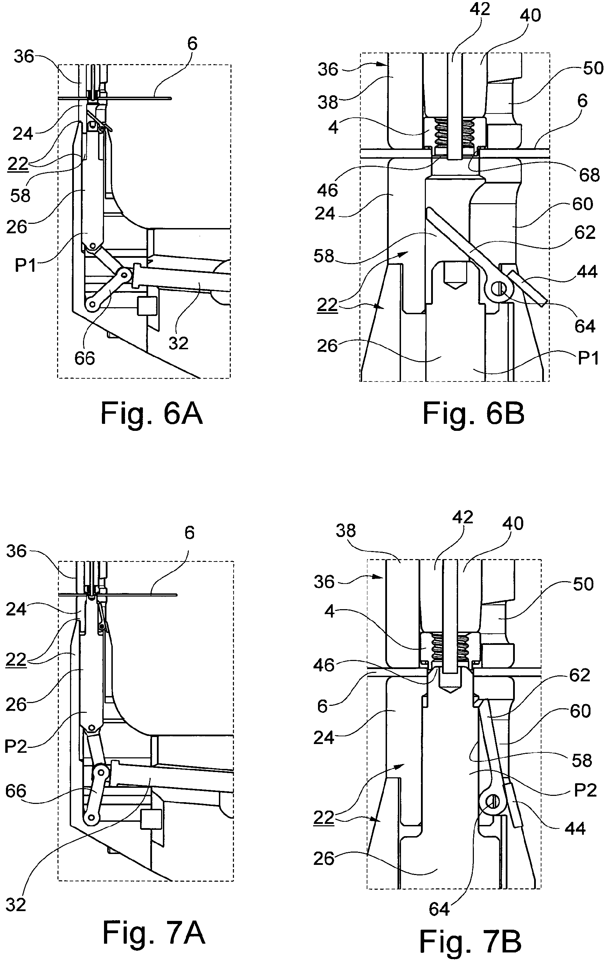

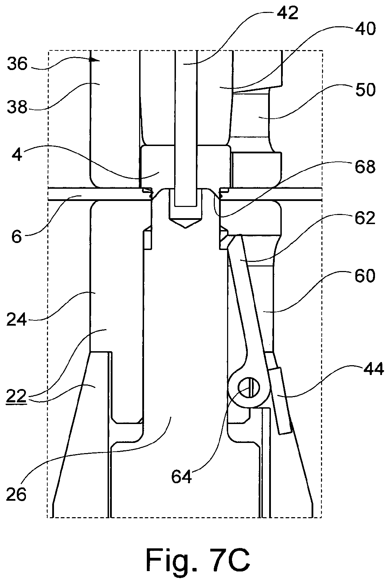

Die Vorrichtung 2 umfasst weiterhin einen Halter 20, welcher zur Auflage oder zum Halten des Werkstücks 6 vorgesehen ist. Im Betrieb liegt das Werkstück 6 auf diesem Halter 20 auf. Dieser Halter 20 bildet dabei eine mehrteilige Matrize 22, deren näherer Aufbau insbesondere im Zusammenhang mit den Fig. 6,7 näher erläutert wird. Der Halter 20 bzw. die Matrize 22 sind gegenüberliegend zur Setzeinheit 8 am unteren Bogenteil 12B angeordnet.

Die mehrteilige Matrize 22 weist allgemein (vgl. hierzu Fig. 6,7) einen Grundkörper 24 sowie einen innerhalb des Grundkörpers 24 verstellbaren Matrizenstempel 26 auf. Zur Verstellung des Matrizenstempels 26 ist ein Antriebsmechanismus 28 vorgesehen. Dieser umfasst einen zweiten Antrieb 30, welcher ebenfalls insbesondere als ein Elektromotor ausgebildet ist. Weiterhin umfasst der Antriebsmechanismus 28 eine Betätigungsstange 32, die mittels des zweiten Antriebs 30 in ihrer Längsrichtung versetzbar ist. An ihrem vorderen Ende ist sie mit einem Gestänge 34 verbunden, welches wiederum mit dem Matrizenstempel 26 verbunden ist.

Die Setzeinheit 8 weist allgemein einen Setzkopf 36 auf. Dieser weist wiederum an seinem vorderen Ende einen Niederhalter 38 sowie einen darin verfahrbar angeordneten Stempel auf, welcher insbesondere als Stempelhülse 40 ausgebildet ist. Vorzugsweise ist ergänzend innerhalb der Stempelhülse 40 ein Auswerferstift 42 angeordnet, der zum Auswerfen eines Stanzbutzens 44 dient (vgl. hierzu wiederum Fig. 6,7). Die Stempelhülse 40 dient allgemein zur Führung des Verbindungselements 4 zum Werkstück 6 hin. Ergänzend ist die Stempelhülse 40 in bevorzugter Ausgestaltung als Stanzhülse ausgebildet, sodass mit dieser ein Stanzvorgang zur Erzeugung eines Lochs 46 im Werkstück 6 durchgeführt werden kann.

Die Zuführeinheit 10 ist am Träger 12 mittels einer Linearführung 48 befestigt und kann in Zustellrichtung 18 an unterschiedliche Positionen verfahren werden. Zur Übergabe des Verbindungselements 4 an den Setzkopf 36 weist dieser eine seitliche Zuführöffnung 50 auf (vgl. hierzu insbesondere Fig. 6B). Die Zuführung erfolgt also allgemein seitlich, etwa rechtwinklig zur Zustellrichtung 18. Die Zuführeinheit 10 weist hierzu insbesondere einen in Querrichtung ausfahrbaren Zuführstempel 52 oder Schieber auf. Dieser wird wahlweise pneumatisch, hydraulisch und insbesondere elektromotorisch betätigt.

Die Zuführung der Verbindungselemente 4 zur Zuführeinheit 10 erfolgt im Ausführungsbeispiel mithilfe eines Zuführschlauchs 54.

Der Setzvorgang wird allgemein mithilfe einer Steuervorrichtung 56 gesteuert. Diese steuert dabei insbesondere den ersten Antrieb 14, den zweiten Antrieb 30, sowie die Verstellung der Zuführeinheit 10 entlang der Linearführung 48 (welche vorzugsweise ebenfalls mittels eines elektromotorischen Antriebs erfolgt) und ergänzend auch die Betätigung des Zuführstempels 52.

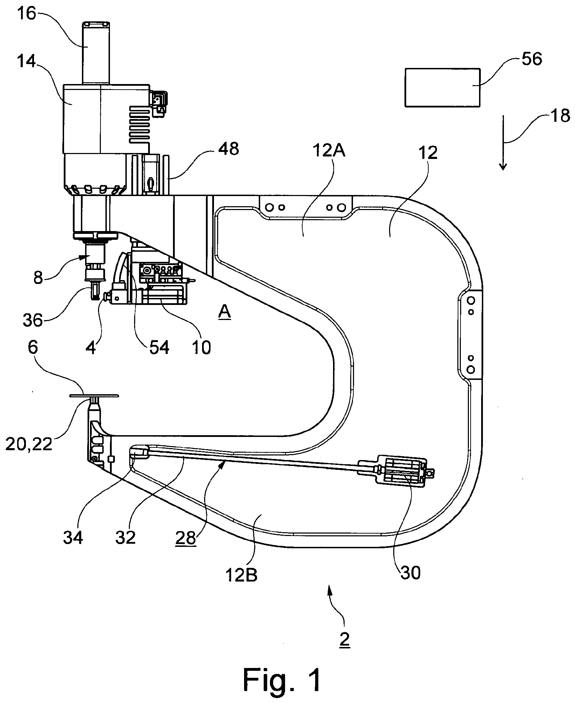

Ein erstes Konzept betrifft das Verfahren der Zuführeinheit 10 zusammen mit der Setzeinheit 8 in Zustellrichtung 18, insbesondere auch das dynamische Nachführen der Zuführeinheit 10 bei der Abfolge von mehreren hintereinander ablaufenden Setzvorgängen (Arbeitszyklen). Dieser erste Aspekt wird im Zusammenhang mit den Fig. 1 bis 5 näher erläutert:

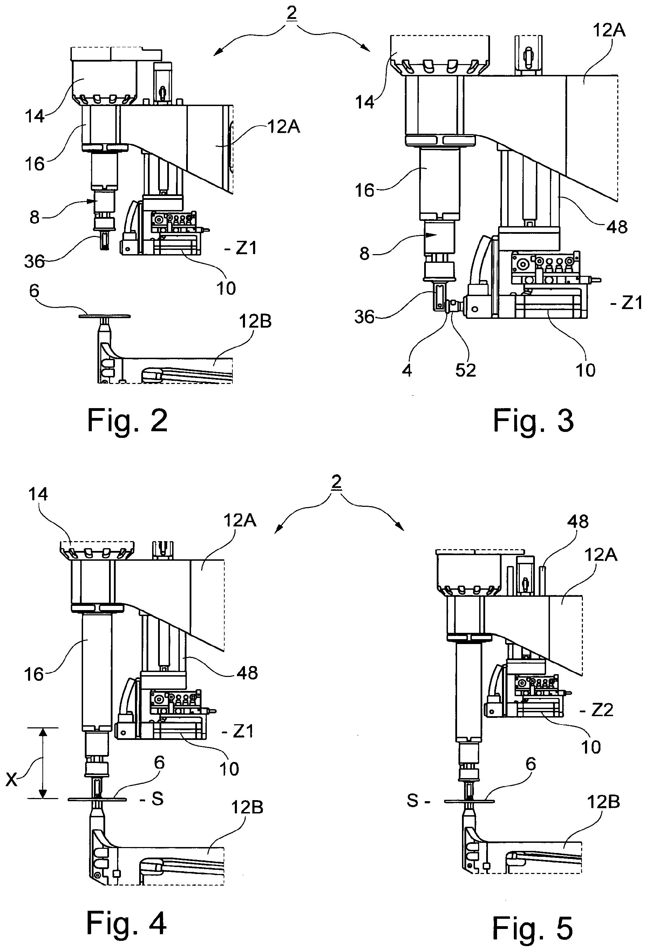

Fig. 1 zeigt die Zuführeinheit 10 sowie die Setzeinheit 8 in einer vollständig zurückgezogenen Ausgangsposition A. Ausgehend von dieser Ausgangsposition A lässt sich die Zuführeinheit 10 in beliebige Zwischenpositionen zwischen der Ausgangsposition A und einer Setzposition S der Setzeinheit 8 verfahren. In der Fig. 2 ist dabei eine erste Zwischenposition Z1 und in der Fig. 5 eine zweite Zwischenposition Z2 dargestellt. Zu Beginn einer Bearbeitung des Werkstücks 6, bei dem insbesondere mehrere Verbindungselemente 4 nacheinander im Rahmen von mehreren Setzvorgängen befestigt werden, verfährt zunächst aus der in Fig. 1 dargestellten Ausgangsposition A die Zustelleinheit 10 vorzugsweise gemeinsam mit der Setzeinheit 8 in die in Fig. 2 dargestellte erste Zwischenposition Z1. In dieser erfolgt eine Übergabe des Verbindungselements 4 von der Zuführeinheit 10 an den Setzkopf 36. Hierzu fährt der Zuführstempel 52 seitlich heraus, um das Verbindungselement 4 seitlich dem Setzkopf 36 zuzuführen. Nach erfolgter Übergabe verfährt lediglich die Setzeinheit 8 zu der Setzposition S, die in Fig. 4 dargestellt ist. In dieser Setzposition S erfolgt der eigentliche Setzschritt zur formschlüssigen Verbindung des Verbindungselements 4 mit dem Werkstück 6.

Nach jedem Setzvorgang ist eine erneute Zuführung eines weiteren Verbindungselements 4 zum Setzkopf 36 erforderlich. Aufgrund der axialen Verstellung in Zustellrichtung 18 ist ein erforderlicher Verfahrweg x, den die Setzeinheit 8 zurücklegen muss, dahingehend optimiert, dass dieser unter den jeweiligen Gegebenheiten möglichst kurz ist. Dadurch lassen sich hohe Taktraten erreichen.

In den Figuren ist das Werkstück 6 als ein einfaches flaches Blech dargestellt. Bei einer derartigen einfachen Geometrie würde die Zuführeinheit 10 eine Zwischenposition einnehmen, die nahe der Setzposition S ist. Typischerweise müssen die Verbindungselemente 4, speziell beispielsweise bei Kraftfahrzeug-Bauteilen, in komplexe Werkstück-Geometrien eingebracht werden, bei denen die Zugänglichkeit begrenzt ist. Typischerweise ist der Träger 12 dabei beispielsweise an einer Roboterhand befestigt und wird relativ zum Werkstück 6 bewegt. Bei dieser Bewegung ist ein Kontakt beispielsweise der Zuführeinheit 10 mit dem Werkstück 6 zu vermeiden. Die Zuführeinheit 10 ist daher an eine geeignete rückgezogene Zwischenposition zu bringen. Im Verlauf der Werkstück-Bearbeitung 6 (also im Verlauf der mehreren Setzvorgänge) kann es dabei erforderlich sein, dass die Zuführeinheit 10 an unterschiedliche Zwischenpositionen verfahren werden muss. Beispielhaft ist in Fig. 5 dargestellt, dass nach dem Setzvorgang zum Setzen des ersten Verbindungselements gemäß Fig. 4 die Zuführeinheit 10 in die weiter zurückgezogene zweite Zwischenposition Z2 verfährt. Dies erfolgt beispielsweise bereits während des vorhergehenden Setzvorgangs. Alternativ kann aber auch ein Rückführen während der Rückführbewegung der Setzeinheit 8 erfolgen.

Im Hinblick auf eine möglichst hohe Taktrate ist weiterhin allgemein vorgesehen, dass für die erneute Übergabe eines weiteren Verbindungselements 4 für einen nachfolgenden Setzvorgang der Zuführstempel 52 mit einem daran gehaltenen Verbindungselement 4 bereits in eine Vorposition verfährt, in der der Zuführstempel 52 teilweise ausgefahren ist.

Nach erfolgtem Setzvorgang fährt allgemein die Setzeinheit 8 an die Zwischenposition zurück, an der sich die Zuführeinheit 10 befindet, nimmt das nächste Verbindungselement 4 auf, verfährt anschließend wieder zur Setzposition S und fügt das nächste Verbindungselement 4 in das Werkstück 6 ein.

Insgesamt wird dieser Zyklus "Aufnahme des Verbindungselements 4 - Durchführung des Setzvorgangs an der Setzposition S - Aufnahme des nächsten Verbindungselements 4" als Arbeitszyklus wiederholt durchgeführt, bis zum Beispiel das Werkstück bearbeitet, also mit der vorgesehenen Anzahl von Verbindungselementen versehen ist. Innerhalb eines solches Arbeitszykluses ist bei einem dynamischen Nachführen der Zuführeinheit 10 zusätzlich der Schritt "Verfahren der Zuführeinheit in eine weitere Zwischenposition" vorgesehen. Bei der Abfolge von mehreren derartigen Arbeitszyklen erfolgt in diesem Fall dann ein dynamisches Nachfahren der Zuführeinheit 10.

Ein zweiter wesentlicher Aspekt betrifft die Verfahrbarkeit des Matrizenstempels 26 innerhalb des Grundkörpers 24. Dies wird im Zusammenhang mit den Fig. 6 und 7 näher erläutert:
Bei dem Setzvorgang handelt es sich insbesondere um einen mehrstufigen Setzvorgang, welcher sich zusammensetzt aus einem Stanzvorgang und einem Umformvorgang zum formschlüssigen Verbinden des Verbindungselements 4 mit einem Lochrand des Lochs 46 des Werkstücks 6.

Aus den vergrößerten Darstellungen gemäß den Fig. 6B, 7B sowie 7C ist zunächst noch einmal der Aufbau des Setzkopfes 36 zu erkennen, mit dem Niederhalter 38, der darin geführten Stempelhülse 40 sowie dem wiederum darin geführten Auswerferstift 42. Diese drei Elemente werden dabei entweder gekoppelt miteinander oder auch unabhängig voneinander geeignet geführt und nehmen unterschiedliche Axialpositionen ein. Wie weiterhin anhand dieser Darstellung zu erkennen ist, weist der Niederhalter 38 die seitliche Zuführöffnung 50 für die seitliche Zuführung des Verbindungselements 4 auf.

Bei dem Setzvorgang wird allgemein mithilfe des Niederhalters 38 das Werkstück 6 gegen den Halter 20 bzw. gegen die Matrize 22 gepresst. Das Werkstück 6 kommt daher zum Aufliegen auf einer Oberseite der Matrize 22, genauer gesagt auf einer Oberseite des Grundkörpers 24. Aus den Figuren ist weiterhin der Aufbau der Matrize 22 zu erkennen. Danach weist der Grundkörper 24 einen inneren Kanal 58 auf, innerhalb dessen der Matrizenstempel 26 entgegen bzw. in Zustellrichtung 18 verstellbar angeordnet ist.

Der Grundkörper 24 weist weiterhin eine seitliche Öffnung 60 auf, welche mithilfe einer Klappe 62 verschließbar ist. Bei der Klappe 62 handelt es sich im Ausführungsbeispiel um eine Drehklappe, die mit ihrem einen Ende um ein Drehgelenk 64 rotierbar angeordnet ist. Sie ist dabei von einer die Öffnung 60 frei gebenden Stellung (Fig. 6B) in eine die Öffnung 60 verschließende Stellung (Fig. 7B) überführbar, wobei sie in letzterer im Wesentlichen vertikal orientiert ist. In der OffenStellung liegt sie insbesondere mit ihrem einen Ende an einem der Öffnung 60 gegenüberliegenden Wandungsbereich des inneren Kanals 58 an und ist insbesondere schräg bezüglich der Zuführrichtung 18 orientiert. Sie definiert dadurch quasi eine Schräge oder Rutsche (Rampe), über die der Stanzbutzen 44 automatisch über die seitliche Öffnung 60 herausgleiten kann.

Die Betätigung der Klappe 62 erfolgt dabei automatisch mithilfe des Matrizenstempels 26.

Dieser ist allgemein zwischen einer rückgezogenen Stanzposition P1, wie sie in den Fig. 6A,6B dargestellt ist, und einer vorderen Umformposition P2, wie sie in den Fig. 7A,7B sowie 7C dargestellt ist, verfahrbar angeordnet.

Die Verstellbewegung erfolgt dabei mithilfe des Antriebsmechanismus 28. Insbesondere weist der Antriebsmechanismus 28 ein mechanisches Gestänge 66 auf, welches insbesondere als ein Gelenkhebelmechanismus und speziell als Kniehebel ausgebildet ist. Das mechanische Gestänge 66 wird dabei insbesondere mithilfe der Betätigungsstange 32 betätigt, wobei die im Wesentlichen quer zur Zustellrichtung 18 orientierte Stellbewegung der Betätigungsstange 32 in eine vertikale Bewegung in bzw. entgegen der Zustellrichtung 18 umgewandelt wird.

Ein besonderer Vorteil dieses Antriebsmechanismus 28 mit dem mechanischen Gestänge 66 besteht darin, dass die beim Umformvorgang auftretenden hohen Kräfte zuverlässig über das Gestänge 66 aufgenommen werden können, ohne dass hierdurch der zweite Antrieb 30 übermäßig belastet wird. Im Idealfall werden die Kräfte nicht auf den zweiten Antrieb 30 übertragen. Bei dieser Ausführungsvariante ist also das Gestänge 66 gesperrt. Speziell handelt es sich um ein selbstsperrendes Gestänge 66, beispielsweise infolge der Kniehebel-Ausgestaltung.

Das Gestänge 66 wirkt allgemein auf einen unteren Fußbereich des Matrizenstempels 26 ein und ist mit diesem Fußbereich gelenkig verbunden. Im Ausführungsbeispiel mit dem Kniehebel sind insgesamt drei Gelenkverbindungen vorgesehen, einerseits zum Matrizenstempel 26, andererseits zur Betätigungsstange 32 und schließlich zum Träger 12, an dem sich der Kniehebel abstützt.

Der Matrizenstempel 26 weist an seiner Stirnseite üblicherweise eine konische Stirn auf und dient als Gegenlager und zur Umformung eines Teilbereichs des Verbindungselements 4 zur Ausbildung der gewünschten formschlüssigen Verbindung.

Im Ausführungsbeispiel ist als Verbindungselement 4 eine Mutter dargestellt, die an ihrer Unterseite einen Umformkragen 68, auch als Bördelkragen bezeichnet, aufweist. Dieser Umformkragen 68 wird beim Umformvorgang nach außen aufgebogen, sodass ein formschlüssiger Hintergriff mit dem Werkstück 6 ausgebildet wird.

Im Ausführungsbeispiel ist insbesondere eine selbststanzende Mutter vorgesehen, die sich also ihr Loch 46 zunächst selber stanzt, bevor der Umformvorgang erfolgt.

Im Rahmen des mehrstufigen Setzvorgangs erfolgt allgemein zunächst der Lochstanzvorgang. Dies erfolgt wahlweise mit dem selbststanzenden Verbindungselement 4 oder auch mit der Stempelhülse 40, die in diesem Fall dann als eine Stanzhüls ausgebildet ist.

Bei der Variante mit der selbststanzenden Mutter wird diese in der ersten Stufe des Setzvorgangs mithilfe der Stempelhülse 40 gegen das Werkstück 6 gepresst und in dieses hineingepresst, sodass der Umformkragen 68, welcher in diesem Fall zugleich als Stanzkragen ausgebildet ist, das Werkstück 6 durchdringt und den Stanzbutzen 44 ausstanzt. Bei diesem Stanzvorgang ist der Matrizenstempel 26 in der in den Fig. 6A,6B dargestellten rückgezogenen Stanzposition P1 angeordnet. Dies gilt auch für den Fall, dass der Stanzvorgang mithilfe der Stempelhülse 40 erfolgt.

Für den anschließenden Umformvorgang bestehen allgemein zwei unterschiedliche Varianten:
Gemäß einer ersten Variante wird das Verbindungselement 4 mithilfe des Setzkopfes 36 gegen den in diesem Fall feststehenden Matrizenstempel 26 verfahren, sodass die Umformung des Umformkragens 68 erfolgt. Bei dieser ersten Variante ist ausgehend von der Fig. 6B zunächst noch ein zumindest geringfügiges Zurücksetzen des Verbindungselements 4 erforderlich. Die Stempelhülse 40 fährt also ein Teilstück zurück. Anschließend verfährt der Matrizenstempel 26 in die vordere Umformposition P2 (Fig. 7A, 7B) und dringt mit seiner Stirnseite in das vorgestanzte Loch 46 ein. Im nachfolgenden Umformschritt wird dann das Verbindungselement 4 gegen den Matrizenstempel 26 gepresst, wie dies in der Fig. 7C dargestellt ist. Bei dieser Ausführungsvariante werden die in Axialrichtung wirkenden Umformkräfte zumindest weitgehend oder auch vollständig durch das insbesondere selbstsperrende mechanische Gestänge 66 aufgenommen, sodass der zweite Antrieb 30 von dem Umformkräften entlastet ist.

Bei der zweiten Variante wird ein umgekehrter Bewegungsvorgang vorgesehen, wonach ausgehend von der in der Fig. 6B dargestellten Position das Verbindungselement im bereits gestanzten Loch 46 verbleibt und mithilfe des Setzkopfes 36 in dieser Position gehalten wird. Anschließend verfährt der Matrizenstempel 26 nach vorne in die Umformposition P2. Dabei erfolgt ein Umformen (radiales Aufweiten) des Umformkragens 68.

Auch bei dieser zweiten Variante sind die vom zweiten Antrieb 30 aufzunehmenden Umformkräfte gering gehalten. Dies erfolgt insbesondere aufgrund der speziellen Ausgestaltung des Gestänges 66, welches sich allgemein auch am Träger 12 abstützt, zumindest mit einem Gelenkarm, sodass also zumindest ein Teil der Umformkräfte direkt in den Träger 12 umgeleitet wird. Schließlich ist durch die spezielle Gelenkhebelmechanik ein günstiger Hebel geschaffen, sodass die vom zweiten Antrieb ausgeübte Kraft entsprechend den Hebelgesetzen verstärkt wird.

Die vorliegend beschriebenen einzelnen vorteilhaften Ausgestaltungen und unterschiedlichen Aspekte lassen sich in beliebige Unterkombinationen miteinander kombinieren und sind nicht auf die dargestellten Kombinationen in den Figuren beschränkt.

### Bezugszeichenliste

- 2: Vorrichtung
- 4: Verbindungselement
- 6: Werkstück
- 8: Setzeinheit
- 10: Zuführeinheit
- 12: Träger
- 12A: oberes Bogenteil
- 12B: unteres Bogenteil
- 14: erster Antrieb
- 16: Stößel
- 18: Zustellrichtung
- 20: Halter
- 22: Matrize
- 24: Grundkörper
- 26: Matrizenstempel
- 28: Antriebsmechanismus
- 30: zweiter Antrieb
- 32: Betätigungsstange
- 34: Gestänge
- 36: Setzkopf
- 38: Niederhalter
- 40: Stempelhülse
- 42: Auswerferstift
- 44: Stanzbutzen
- 46: Loch
- 48: Linearführung
- 50: seitliche Zuführöffnung
- 52: Zuführstempel
- 54: Zuführschlauch
- 56: Steuervorrichtung
- 58: innerer Kanal
- 60: seitliche Öffnung
- 62: Klappe
- 64: Drehgelenk
- 66: mechanisches Gestänge
- 68: Umformkragen

- A: Ausgangsposition
- P1: Stanzposition
- P2: Umformposition
- S: Setzposition
- Z: Zwischenposition
- Z1: erste Zwischenposition
- Z2: zweite Zwischenposition
- x: Verfahrweg

## Patentansprüche

1. Vorrichtung (2) zur Durchführung eines Setzvorgangs zum Setzen eines Verbindungselements (4) an einem Werkstück (6),
- mit einer Steuervorrichtung (56) zum Steuern des Setzvorgangs,
- mit einer Setzeinheit (8), die einen Setzkopf aufweist, welcher in einer Zustellrichtung in eine Arbeitsposition verfahrbar ist und wobei das Verbindungselement (4) mithilfe des Setzkopfes am Werkstück (6) befestigbar ist,
- mit einer Zuführeinheit (10) mit der das Verbindungselement (4) dem Setzkopf zuführbar ist,
**dadurch gekennzeichnet,**
**dass** die Zuführeinheit (10) in Zustellrichtung (18) von einer Ausgangsposition (A) in eine frei einstellbare Zwischenposition (Z) zur Übergabe eines Verbindungselements (4) zum Setzkopf (36) verfahrbar ist, so dass eine Übergabe des Verbindungselements (4) an den Setzkopf (36) an unterschiedlichen Positionen zwischen der Ausgangsposition (A) und der Arbeitsposition ermöglicht ist.

2. Vorrichtung nach dem vorhergehenden Anspruch,
**dadurch gekennzeichnet,**
**dass** der Setzkopf (36) und die Zuführeinheit (10) unabhängig voneinander in Richtung zur Arbeitsposition verfahrbar sind.

3. Vorrichtung nach einem der vorhergehenden Ansprüche,
**dadurch gekennzeichnet,**
**dass** Setzkopf (36) und Zuführeinheit (10) parallel zueinander verfahrbar sind.

4. Vorrichtung nach einem der vorhergehenden Ansprüche,
**dadurch gekennzeichnet,**
**dass** die Zuführeinheit (10) linearverschieblich an einem Träger (12) gelagert ist.

5. Vorrichtung nach einem der vorhergehenden Ansprüche,
**dadurch gekennzeichnet,**
**dass** die Steuervorrichtung (56) derart ausgebildet ist, dass die Zwischenposition (Z) in Abhängigkeit der Geometrie des Werkstücks (6) eingenommen wird.

6. Vorrichtung nach dem vorhergehenden Anspruch,
**dadurch gekennzeichnet,**
**dass** die Steuervorrichtung (56) ausgelegt ist die Zwischenposition (Z) derart auszuwählen, dass ein Verfahrweg (x) für die Setzeinheit (8) zwischen zwei aufeinanderfolgenden Setzvorgängen in Abhängigkeit der Geometrie des Werkstücks (6) optimiert ist.

7. Vorrichtung nach einem der vorhergehenden Ansprüche,
**dadurch gekennzeichnet,**
**dass** die Steuervorrichtung (56) ausgelegt ist die Zwischenposition (Z) derart auszuwählen, dass diese bei aufeinanderfolgenden Setzvorgängen dynamisch insbesondere in Abhängigkeit der Geometrie des Werkstückes (6) nachgefahren wird.

8. Vorrichtung nach einem der Ansprüche 1 bis 8,
**dadurch gekennzeichnet,**
**dass** die Steuervorrichtung (56) derart ausgelegt ist, dass die Zuführeinheit für mehrere Setzvorgänge in der Zwischenposition (Z) verbleibt.

9. Vorrichtung nach einem der vorhergehenden Ansprüche,
**dadurch gekennzeichnet,**
**dass** die Zuführeinheit derart ausgebildet ist, dass das Verbindungselement (4) dem Setzkopf (36) quer zur Zustellrichtung zuführbar ist.

10. Vorrichtung nach einem der vorhergehenden Ansprüche,
**dadurch gekennzeichnet,**
**dass** die Zuführeinheit ein Magazin zur Bevorratung mehrerer Verbindungselemente (4) aufweist und/oder mit einer Zuführeinrichtung für die Verbindungselemente verbunden ist, insbesondere mit einem Zuführschlauch(54).

11. Vorrichtung nach einem der vorhergehenden Ansprüche,
**dadurch gekennzeichnet,**
**dass** die Setzeinheit und die Zuführeinheit an einem gemeinsamen Träger (12) gehalten sind.

12. Vorrichtung nach dem Anspruch 11, **dadurch gekennzeichnet,**
**dass** der Träger (12) bogenförmig, insbesondere als C-Bogen ausgebildet ist und die Setzeinheit und Zuführeinheit an einem oberen Bogenteil (12A) befestigt sind und an einem unteren Bogenteil (12B) eine Halterung für das Werkstück (4) angeordnet ist.

13. Vorrichtung nach einem der vorhergehenden Ansprüche
**gekennzeichnet durch**
eine Matrize (22), gegen die der Setzkopf (36) in Richtung zum Werkzeug in einer Zustellrichtung verfahrbar ist, und die einen Grundkörper sowie einen in diesem verschieblich angeordneten Matrizenstempel (26) aufweist, der im Betrieb als Widerlager beim Setzen des Verbindungselements (4) dient und/oder mit dessen Hilfe im Betrieb eine Umformung des Verbindungselements (4) zur Ausbildung einer formschlüssigen Verbindung mit dem Werkstück (6) erfolgt, wobei der Matrizenstempel (26) entgegen der Zustellrichtung mithilfe eines Antriebsmechanismus gesteuert verstellbar ist.

14. Vorrichtung nach einem der vorhergehenden Ansprüche,
**dadurch gekennzeichnet,**
**dass** es sich bei dem Verbindungselement (4) um ein selbststanzendes Verbindungselement handelt, insbesondere um eine Stanzmutter oder einen Stanzniet, speziell um einen Stanzhalbhohlniet.

15. Verfahren zum Setzen eines Verbindungselements (4) an einem Werkstück (6) mithilfe einer Vorrichtung nach einem der vorhergehenden Ansprüche.

## Claims

1. Device (2) for carrying out a setting process for setting a connecting element (4) on a workpiece (6),
- having a control device (56) for controlling the setting process,
- having a setting unit (8), which has a setting head, which can be moved in a feed direction into a working position and wherein the connecting element (4) can be fastened on the workpiece (6) with the aid of the setting head,
- having a supply unit (10) with which the connecting element (4) can be supplied to the setting head,
**characterised in that**
the supply unit (10) can be moved in the feed direction (18) from an initial position (A) into a freely adjustable intermediate position (Z) for transferring a connecting element (4) to the setting head (36), such that a transfer of the connecting element (4) to the setting head (36) is possible at different positions between the initial position (A) and the working position.

2. Device according to the preceding claim,
**characterised in that**
the setting head (36) and the supply unit (10) can be moved independently of each other in the direction of the working position.

3. Device according to one of the preceding claims,
**characterised in that**
setting head (36) and supply unit (10) can be moved in parallel to each other.

4. Device according to one of the preceding claims,
**characterised in that**
the supply unit (10) is linearly displaceably mounted on a carrier (12).

5. Device according to one of the preceding claims,
**characterised in that**
the control device (56) is formed in such a way that the intermediate position (Z) is adopted depending on the geometry of the workpiece (6).

6. Device according to the preceding claim,
**characterised in that**
the control device (56) is designed to select the intermediate position (Z) in such a way that a movement path (x) is optimised for the setting unit (8) between two successive setting processes depending on the geometry of the workpiece (6).

7. Device according to one of the preceding claims,
**characterised in that**
the control device (56) is designed to select the intermediate position (Z) in such a way that this intermediate position (Z) is dynamically tracked during successive setting processes, in particular depending on the geometry of the workpiece (6).

8. Device according to one of claims 1 to 8,
**characterised in that**
the control device (56) is designed in such a way that the supply unit remains in the intermediate position (Z) for several setting processes.

9. Device according to one of the preceding claims,
**characterised in that**
the supply unit is formed in such a way that the connecting element (4) can be supplied to the setting head (36) transversely to the supply direction.

10. Device according to one of the preceding claims,
**characterised in that**
the supply unit has a magazine for storing several connecting elements (4) and/or is connected to a supply device for the connecting elements, in particular to a supply hose (54).

11. Device according to one of the preceding claims,
**characterised in that**
the setting unit and the supply unit are held on a common carrier (12).

12. Device according to claim 11,
**characterised in that**
the carrier (12) is formed arcuately, in particular as a C-arc, and the setting unit and supply unit are fastened to an upper arc part (12A) and a bracket for the workpiece (4) is arranged on a lower arc part (12B).

13. Device according to one of the preceding claims,
**characterised by**
a die (22), against which the setting head (36) can be moved in the direction of the tool in a feed direction, and which has a base body and a die punch (26), which is displaceably arranged in this base body, said die punch (26) serving in process as an abutment when setting the connecting element (4) and/or with the aid of which a reshaping of the connecting element (4) takes place in process for forming a positive connection to the workpiece (6), wherein the die stamp (26) is controllably adjustable in the opposite direction to the feed direction with the aid of a drive mechanism.

14. Device according to one of the preceding claims,
**characterised in that**
the connecting element (4) is a self-piercing connecting element, in particular a piercing nut or a piercing rivet, especially a semi-hollow piercing rivet.

15. Method for setting a connecting element (4) on a workpiece (6) with the aid of a device according to one of the preceding claims.

## Revendications

1. Dispositif (2) pour la réalisation d'un processus de mise en place pour la mise en place d'un élément de liaison (4) sur une pièce (6),
- avec un dispositif de commande (56) pour la commande du processus de mise en place,
- avec une unité de mise en place (8), qui présente une tête de mise en place qui, dans une direction d'avance, peut être déplacée dans une position de travail et où l'élément de liaison (4) peut être fixé sur la pièce (6) à l'aide de la tête de mise en place,
- avec une unité d'amenée (10) avec laquelle l'élément de liaison (4) peut être amené à la tête de mise en place,
**caractérisé en ce que** l'unité d'amenée (10) peut être déplacée dans la direction d'avance (18) d'une position de départ (A) dans une position intermédiaire (Z) qui peut être réglée librement pour le transfert d'un élément de liaison (4) à la tête de mise en place (36), de sorte qu'un transfert de l'élément de liaison (4) à la tête de mise en place (36) est possible dans différentes positions entre la position de départ (A) et la position de travail.

2. Dispositif selon la revendication précédente, **caractérisé en ce que** la tête de mise en place (36) et l'unité d'amenée (10) peuvent être déplacées dans la direction de la position de travail indépendamment l'une de l'autre.

3. Dispositif selon l'une des revendications précédentes, **caractérisé en ce que** la tête de mise en place (36) et l'unité d'amenée (10) peuvent être déplacées parallèlement entre elles.

4. Dispositif selon l'une des revendications précédentes, **caractérisé en ce que** l'unité d'amenée (10) est montée sur un support (12) de manière déplaçable linéairement.

5. Dispositif selon l'une des revendications précédentes, **caractérisé en ce que** le dispositif de commande (56) est agencé de telle manière que la position intermédiaire (Z) est occupée en fonction de la géométrie de la pièce (6).

6. Dispositif selon l'une des revendications précédentes, **caractérisé en ce que** le dispositif de commande (56) est étudié pour choisir la position intermédiaire (Z) de telle manière qu'un trajet de déplacement (x) pour l'unité de mise en place (8) est optimisé entre deux processus de mise en place qui se succèdent en fonction de la géométrie de la pièce (6).

7. Dispositif selon l'une des revendications précédentes, **caractérisé en ce que** le dispositif de commande (56) est étudié pour choisir la position intermédiaire (Z) de telle manière que celle-ci est répétée de manière dynamique en particulier en fonction de la géométrie de la pièce (6) dans le cas de processus de mise en place qui se suivent.

8. Dispositif selon l'une des revendications 1 à 8, **caractérisé en ce que** le dispositif de commande (56) est étudié de telle manière que l'unité d'amenée demeure dans la position intermédiaire (Z) pour plusieurs processus de mise en place.

9. Dispositif selon l'une des revendications précédentes, **caractérisé en ce que** l'unité d'amenée est agencée de telle manière que l'élément de liaison (4) peut être amené à la tête de mise en place (36) transversalement à la direction d'avance.

10. Dispositif selon l'une des revendications précédentes, **caractérisé en ce que** l'unité d'amenée présente un magasin pour le stockage de plusieurs éléments de liaison (4) et/ou est reliée à une installation d'amenée pour les éléments de liaison, en particulier à un tuyau d'amenée (54).

11. Dispositif selon l'une des revendications précédentes, **caractérisé en ce que** l'unité de mise en place et l'unité d'amenée sont maintenues sur un support commun (12).

12. Dispositif selon la revendication 11, **caractérisé en ce que** le support (12) est agencé en forme d'arc, en particulier en forme d'arc en C, et l'unité de mise en place et l'unité d'amenée sont fixées sur une partie d'arc supérieure (12A) et une fixation pour la pièce (4) est agencée sur une partie d'arc inférieure (12B).

13. Dispositif selon l'une des revendications précédentes, **caractérisé par** une matrice (22) contre laquelle la tête de mise en place (36) peut être déplacée dans la direction de l'outil dans une direction d'avance, et qui présente un corps de base ainsi qu'un poinçon de matrice (26) agencé de manière déplaçable dans celui-ci, qui, pendant le fonctionnement, sert de contre-appui lors de la mise en place de l'élément de liaison (4) et/ou avec l'aide duquel, pendant le fonctionnement, une déformation de l'élément de liaison (4) pour la formation d'une liaison par assemblage de forme avec la pièce (6) se produit, où le poinçon de matrice (26) peut être déplacé de manière commandée contre la direction d'avance à l'aide d'un mécanisme d'entraînement.

14. Dispositif selon l'une des revendications précédentes, **caractérisé en ce qu'**il s'agit, concernant l'élément de liaison (4), d'un élément de liaison à auto-estampage, en particulier d'un écrou d'estampage ou d'un rivet d'estampage, spécialement d'un rivet semi-cylindrique d'estampage.

15. Procédé pour la mise en place d'un élément de liaison (4) sur une pièce (6) à l'aide d'un dispositif selon l'une des revendications précédentes.
